# FASCICULE DE BREVET EUROPEEN

(11) **EP 1 623 860 B1**
(45) Date de publication et mention de la délivrance du brevet: **02.01.2008**
(21) Numéro de dépôt: 05015753.6
(22) Date de dépôt: 20.07.2005
(51) Int. Cl.: B60H 1/24

(54) **Module de ventilation d'air pour un habitacle de véhicule**
Belüftungsmodul für einen Fahrzeuginnenraum
Ventilation unit for a vehicle passenger compartment

(30) Priorité: 03.08.2004 FR 0408590
(43) Date de publication de la demande: 08.02.2006
(73) Titulaire: VALEO SYSTEMES THERMIQUES, 78320 Le Mesnil Saint-Denis (FR)
(72) Inventeur: Paumier, Carine, 78000 Versailles (FR); Elliot, Gilles, 91080 Courcouronnes (FR); Renard, Alain, 78490 Gambaiseuil (FR); Feuillard, Vincent, 78320 Le Mesnil Saint Denis (FR); Puzenat, Bertrand, 78180 Montigny Le Bretonneux (FR); Tellier, Laurent, 75016 Paris (FR)

(56) Documents cités:
- EP-A- 0 818 338
- US-A- 4 658 707
- US-A- 5 762 665

## Description

L'invention concerne un module de ventilation, notamment pour un habitacle de véhicule, en particulier de véhicule automobile.

Elle concerne plus particulièrement un module comprenant un boîtier propre à être installé dans un emplacement choisi de l'habitacle, le boîtier ayant au moins une entrée d'air et au moins une sortie d'air et logeant un organe de propulsion d'air comprenant au moins un moteur et un élément rotatif permettant de mettre en mouvement l'air.

On connaît déjà des modules de ce type qui sont conçus pour être placés dans un habitacle, notamment de véhicule automobile, en constituant une unité indépendante susceptible d'assurer localement une ventilation d'air dans l'habitacle.

Un tel modul est connu du document US-A-4 658 707.

Un tel module peut être installé par exemple sous le pavillon d'un véhicule automobile pour assurer une ventilation d'air en complément de l'installation de chauffage, ventilation et/ou climatisation que comporte le véhicule.

Ceci peut avoir un intérêt pour assurer une fonction supplémentaire de confort, par exemple à l'arrière de l'habitacle d'un véhicule de grandes dimensions.

Le module peut éventuellement assurer d'autres fonctions, en particulier une fonction de filtration de l'air qui est évacué par la ou les sorties d'air du module.

Dans tous les cas, un module de ventilation d'air de ce type constitue un élément indépendant qui vient s'ajouter à l'installation de chauffage, ventilation et/ou climatisation du véhicule, sans toutefois la remplacer.

Les modules de ventilation d'air utilisés jusqu'à présent sont de conception rudimentaire et comportent le plus souvent un boîtier logeant un organe de propulsion d'air du type ventilateur et éventuellement un filtre rudimentaire, si bien qu'ils assurent principalement une ventilation de l'air à envoyer dans l'habitacle.

L'invention vise à améliorer la situation.

C'est en conséquence un des buts de l'invention de proposer un module du type précité qui permet d'assurer une ventilation correcte de l'air dans des conditions aussi performantes que possibles.

C'est aussi un but de l'invention de proposer un tel module qui permet en outre d'assurer une filtration de l'air, et en particulier d'éliminer des odeurs contenues dans l'air de l'habitacle.

Un autre but de l'invention est de proposer un tel module qui peut réaliser des fonctions de ventilation et/ou de filtration en générant un minimum de perte de charge.

C'est encore un but de l'invention de proposer un tel module qui peut être conçu suivant différentes variantes et en particulier avec différents types d'organes de propulsion d'air et de filtres, le cas échéant.

C'est aussi un but de l'invention de proposer un tel module qui soit d'une conception peu encombrante et qui puisse être implanté facilement en un endroit choisi de l'habitacle. L'invention propose à cet effet un module de ventilation d'air, notamment pour un habitacle de véhicule, du type défini précédemment, dans lequel l'élément rotatif de l'organe de propulsion d'air est logé dans une chambre intérieure du boîtier.

Dans un mode de réalisation préféré de l'invention, le module comporte en outre un filtre, ce qui permet de filtrer l'air de l'habitacle, notamment pour en éliminer des odeurs.
Il est avantageux en ce cas que l'organe de propulsion d'air soit placé en amont par rapport au filtre, si bien que la chambre intérieure délimite un volume de détente pour de l'air comprimé issu de l'organe de propulsion d'air.

Lorsqu'un filtre est présent, il est en outre avantageux que la chambre intérieure soit délimitée en sortie par ce filtre.

Dans une variante de réalisation, l'organe de propulsion d'air est placé en aval par rapport au filtre, si bien que la chambre intérieure délimite un volume pour l'air filtré.

Différents types d'organes de propulsion d'air, appelés aussi "pulseurs d'air", peuvent être utilisés dans le cadre de l'invention, notamment de type radial, tangentiel ou axial.

On préfère tout particulièrement utiliser un organe de propulsion d'air de type radial, c'est-à-dire que l'élément rotatif de cet organe est une turbine radiale logée dans le boîtier.

Lorsqu'un filtre est présent et que le pulseur est placé en amont du filtre, la chambre intérieure précitée est délimitée directement autour de la turbine ce qui permet de diminuer l'encombrement et les pertes de charge.

S'agissant d'une turbine radiale, on utilise avantageusement une turbine dotée de pales, le filtre étant alors espacé de la turbine.

Dans une autre forme de réalisation de l'invention, l'élément rotatif de l'organe de propulsion d'air est une turbine tangentielle.

La chambre intérieure peut délimiter un volume fixe. Elle peut aussi, en variante, délimiter un volume variable créé par la mobilité, d'au moins un organe interne du module.

Cet organe interne est avantageusement constitué par un filtre lorsque le module en est équipé.

On préfère alors que le filtre soit monté mobile dans le boîtier entre une position "rentrée" où le volume intérieur de la chambre intérieure est réduit et une position "sortie" où le volume de la chambre intérieure est augmenté. Il est envisageable, pour cela, que le filtre soit monté pivotant par rapport au boîtier ou, en variante, qu'il soit monté mobile en translation par rapport au boîtier.

Dans une autre forme de réalisation, le filtre est solidaire d'un couvercle monté mobile par rapport au boîtier. Cela signifie, par conséquent, que ce couvercle peut, par exemple, être monté pivotant ou monté mobile en translation par rapport au boîtier.

Le couvercle peut servir aussi à supporter d'autres organes que le filtre, par exemple l'organe de propulsion d'air.

Dans ce cas, le fait de pouvoir déplacer le couvercle permet d'accéder non seulement au filtre, mais aussi à l'organe de propulsion d'air, notamment à des fins d'entretien.

Dans une forme de réalisation avantageuse, le module comprend au moins une sortie d'air filtré pour de l'air issu du filtre et au moins une sortie d'air ventilé pour de l'air non filtré, et des moyens de commutation pour faire passer sélectivement l'air par la sortie d'air filtré et/ou par la sortie d'air non filtré. On comprendra que lorsque l'air passe directement vers la sortie d'air non filtré, sans avoir été filtré au préalable, cela permet d'augmenter le débit de ventilation en réduisant les pertes de charge.

Différentes solutions sont envisageables pour assurer cette fonction de commutation.

Dans une première variante, le boîtier comporte un corps muni d'une face ouverte et un couvercle monté pivotant par rapport au corps entre une position "rentrée" dans le boîtier et une position "sortie" du boîtier, le couvercle comportant au moins une sortie d'air filtré aménagée dans une face principale et au moins une sortie d'air non filtré aménagée dans une face latérale, la sortie d'air non filtré étant dégagée par le corps du boîtier lorsque le couvercle est en position sortie et obturée par le corps du boîtier lorsque le couvercle est en position rentrée.

Dans une deuxième variante, le boîtier comporte une face principale dans laquelle est aménagée au moins une sortie d'air pour de l'air filtré et/ou de l'air non filtré, le filtre étant monté coulissant en regard de la sortie d'air entre une position dans laquelle le filtre dégage la sortie d'air pour faire passer de l'air non filtré et une autre position dans laquelle le filtre obture la sortie d'air pour faire passer de l'air filtré.

Il peut être avantageux de prévoir au moins une résistance électrique, en particulier une résistance à coefficient de température positif, pour réchauffer l'air envoyé dans l'habitacle.

Le filtre utilisé, s'il est présent, est susceptible de diverses variantes. Il peut s'agir par exemple d'un filtre à particules, d'un filtre à charbon actif ou encore d'un filtre photo-catalytique.

Dans la description qui suit, faite seulement à titre d'exemple, on se réfère aux dessins annexés, sur lesquels :
- la figure 1 est une vue partielle en perspective d'un module de ventilation d'air selon une première forme de réalisation de l'invention, dans laquelle une partie du boîtier est ôtée ;
- la figure 2 est une vue en coupe verticale du module de la figure 1 ;
- la figure 3 est une vue en perspective du module des figures 1 et 2, le dessus du boîtier étant ôté ;
- la figure 4 est une vue en perspective d'un module de ventilation d'air selon une deuxième forme de réalisation de l'invention, le module comportant un couvercle pivotant représenté en position "sortie" pour la ventilation ;
- la figure 5 est une vue analogue à la figure 4 montrant le même module dans lequel le couvercle est en position rentrée pour assurer une fonction de filtration d'air ;
- les figures 6 à 8 sont des vues en perspective, avec le boîtier ôté, d'un module de ventilation d'air selon une troisième forme de réalisation de l'invention dans lequel le filtre est monté coulissant pour assurer sélectivement une fonction de filtration ou de ventilation ;
- la figure 9 est une vue en perspective, avec arrachement partiel du boîtier, d'un module de ventilation d'air analogue à celui des figures 6 à 8 mais comportant en outre une résistance de chauffage ;
- les figures 10 à 13 sont des vues schématiques de côté de quatre modules de ventilation d'air dont la chambre intérieure délimite un volume fixe ;
- les figures 14 à 17 sont des vues schématiques de quatre modules de ventilation d'air dont le filtre est monté pivotant pour fournir une chambre intérieure de volume variable ;
- les figures 18 à 21 sont des vues schématiques analogues respectivement aux figures 14 à 17, dans lesquelles chaque module comprend en outre un couvercle pivotant ;
- les figures 22 à 25 sont des vues schématiques de quatre modules de ventilation d'air comportant un filtre monté coulissant verticalement pour délimiter une chambre intérieure de volume variable ; et
- les figures 26 à 29 sont des vues analogues aux figures 22 à 25, dans lesquelles le module comporte en outre un couvercle mobile.

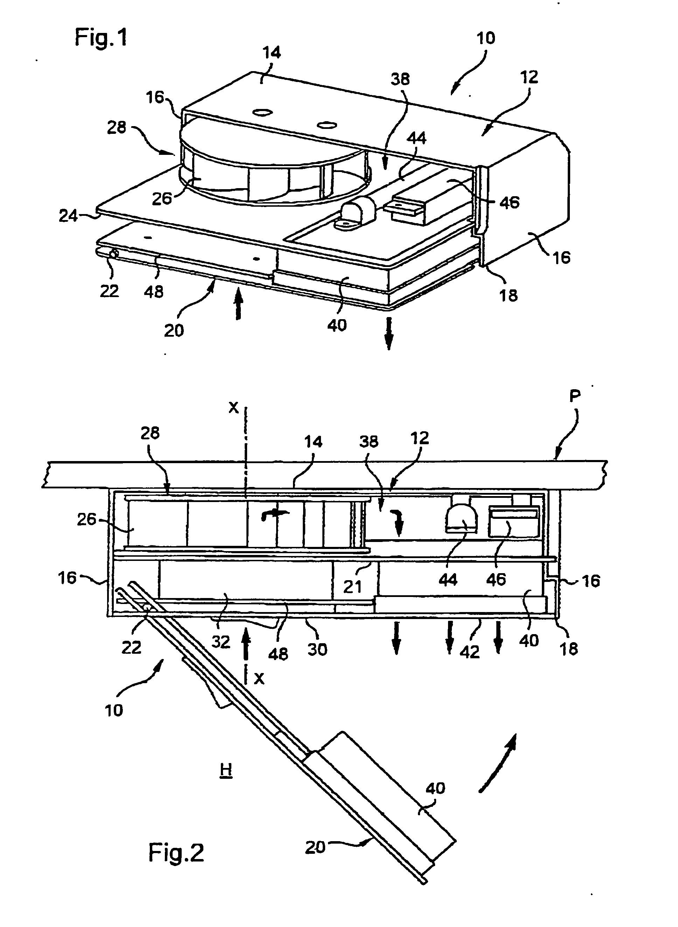

On se réfère d'abord à la figure 1 qui montre un module de ventilation d'air, désigné dans son ensemble par la référence 10, conçu pour être implanté en un emplacement choisi à l'intérieur d'un habitacle de véhicule automobile-Dans l'exemple ce module assure aussi une fonction de filtration et constitue donc un module de ventilation et/ou de filtration d'air.

Le module 10 comprend un boîtier 12 de forme générale parallélépipédique présentant une paroi supérieure 14 conçue pour être placée, dans l'exemple, dans une position sensiblement horizontale, en particulier sous le pavillon P (figure 2) d'un véhicule en étant disposé ainsi dans l'habitacle H de ce véhicule.

Le boîtier 14 comporte en outre des parois latérales 16 qui délimitent une face ouverte 18 de forme générale rectangulaire qui est ici tournée vers le bas. La face ouverte 18 est obturée par un couvercle 20 qui, dans l'exemple, est un couvercle mobile, ici un couvercle monté pivotant autour d'un axe 22 (figure 2). Une cloison 24 est placée à l'intérieur du boîtier dans une position généralement parallèle à la paroi supérieure 14. Dans l'espace délimité entre la cloison 24 et la paroi supérieure 14 est disposé un élément rotatif 26 d'un organe de propulsion d'air 28, qui sera appelé "pulseur d'air" dans la suite de la description.

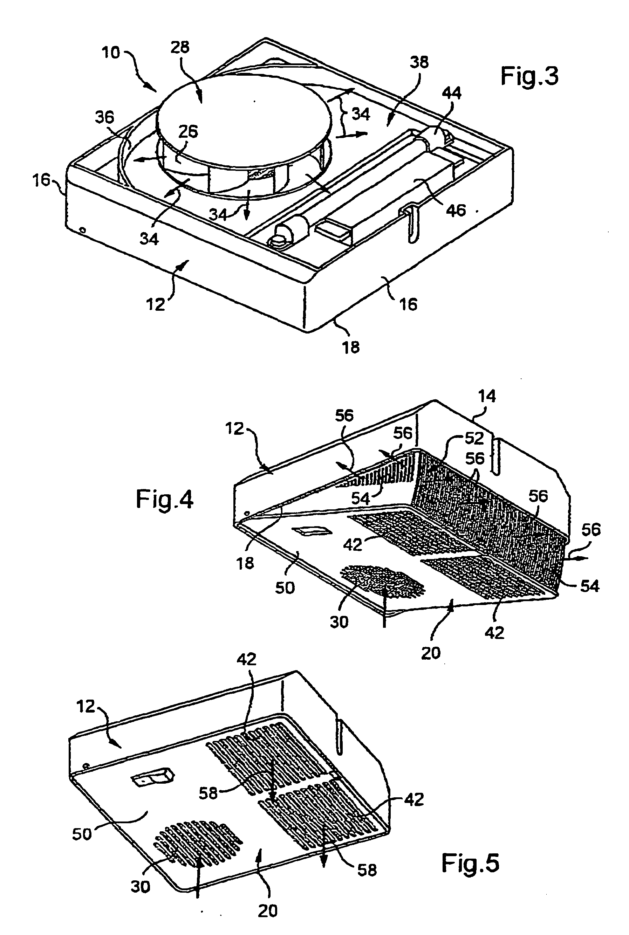

L'élément rotatif 26 est réalisée ici sous la forme d'une turbine radiale munie de pales (figures 1 à 3) et entraînée en rotation autour d'un axe X-X (figure 2) qui est perpendiculaire à la paroi supérieure 14. Le pulseur d'air 28 comporte un moteur électrique (non représenté) qui entraîne en rotation la turbine 26 permettant ainsi d'aspirer un flux d'air en provenance de l'habitacle, ce flux d'air traversant une entrée d'air 30 (figure 2) aménagée dans le couvercle 20. L'air accède ensuite à l'espace intérieur précité au travers d'une virole d'aspiration 32- Le flux d'air ainsi aspiré est accéléré par la turbine radiale 26 dans la direction des flèches 34 montrées sur la figure 3.

Dans l'espace intérieur précité est disposée une cloison 36 de forme incurvée qui permet de délimiter une chambre intérieure d'air 38 dans laquelle est logée la turbine radiale 26. L'air quitte ensuite la chambre intérieure 38 en traversant un filtre 40 qui est disposé sur le couvercle 20 et qui délimite ainsi la chambre intérieure 38 en sortie. Lorsque le couvercle 20 est dans la position fermée, représentée en partie supérieure de la figure 2, le filtre se trouve dans le boîtier et peut ainsi assurer la filtration de l'air qui quitte le boîtier par une sortie d'air 42 (figure 2). Lorsque le couvercle est en position ouverte, comme montré dans la partie inférieure de la figure 2, le filtre 40 est accessible et peut être échangé si nécessaire. Dans l'exemple de réalisation, le filtre est du type à photo-catalyse. Il est associé à une lampe UV 44 et à un ballast 46 de façon en soi connue.

Selon le présent exemple de réalisation, l'ensemble des composants est agencé dans le boîtier 14. Toutefois, certains composants peuvent perturber le flux d'air et nuire aux performances aéro-acoustiques du module 10. Selon une variante de réalisation, il est prévu de réaliser une zone dite 'technique' dans laquelle seront disposés les composants, telles que les cartes électroniques, entraînant une dégradation des performances aéro-acoustiques.

Cette zone dite 'technique' est disposée autour une zone dite 'fonctionnelle'. La zone dite `fonctionnelle' intègre tous les éléments fonctionnels du module 10 tels que le moteur du pulseur, le filtre, ...

Comme on peut le voir en outre sur la figure 1, une carte électronique 48 est placée sur le couvercle 20. L'accès à cette carte est facilité par l'ouverture du couvercle. A cette carte sont associés des moyens de commande, par exemple un bouton de commande, qui ne sont pas visibles sur les figures 1 à 3. Ces moyens de commande sont accessibles à partir de l'extérieur du couvercle et permettent à un utilisateur d'actionner, quand il le souhaite, le pulseur d'air 28.

De façon similaire, la carte électronique 48 comporte un capteur de qualité de l'air intégré directement sur la carte électronique 48. Un tel agencement permet une amélioration de confort intérieur en prenant en considération l'état de l'environnement du dispositif selon la présente invention. Ainsi disposé, le capteur de qualité de l'air est exposé de façon satisfaisante au flux d'air entrant dans le boîtier 14.

Néanmoins, une alternative de réalisation consiste à implanter le capteur de qualité de l'air à une paroi du boîtier 14.

La chambre intérieure 38 précitée délimite un volume de détente dans lequel l'air comprimé issu de l'organe de propulsion d'air peut se détendre, sur les côtés de la turbine, avant d'être filtré, ce qui permet d'améliorer le fonctionnement du module en réduisant les pertes de charge.

Selon un mode préférentiel de réalisation, le volume de détente a une longueur selon le flux d'air comprise entre 0 mm et 10 mm. Une telle disposition permet d'assurer une réduction des dimensions dans l'axe du flux d'air.

Cependant, dans le dispositif des figures 1 à 3, la filtration s'effectue en permanence, c'est-à-dire qu'il n'est pas possible d'effectuer seulement une ventilation sans filtration.

Le dispositif représenté aux figures 4 et 5 permet de réaliser une telle fonction grâce à des moyens de commutation.

Le boîtier 12 comporte une face ouverte 18 et un couvercle 20 monté pivotant par rapport au corps entre une position rentrée dans le boîtier (figure 5) et une position sortie du boîtier (figure 4). Le couvercle comprend une entrée d'air 30 et deux sorties d'air 42 aménagées dans une face principale 50. Les sorties d'air 42 sont destinées à faire passer un flux d'air, préalablement filtré, vers l'habitacle H du véhicule. Le couvercle comprend au moins une face latérale 52 dans laquelle est aménagée au moins une sortie d'air 54 pour de l'air non filtré (figure 4).

Dans la position de la figure 4, les sorties d'air non filtré 54 sont dégagées si bien que de l'air peut s'échapper dans l'habitacle, sans être filtré, comme montré par les flèches 56. En revanche, lorsque le couvercle est dans la position rentrée de la figure 5, les sorties d'air 54 sont obturées et l'air est obligé de passer uniquement par les sorties d'air 42 pour admettre de l'air filtré dans l'habitacle. Ainsi, en modifiant la position du couvercle 20, il est possible d'admettre dans l'habitacle soit de l'air ventilé, donc avec un débit plus fort, soit de l'air filtré, donc avec un débit plus faible en raison des pertes de charge engendrées par le filtre. Dans certaines circonstances, il est intéressant de favoriser la ventilation plutôt que la filtration- Dans le cas de la figure 5, l'air filtré s'échappe vers l'habitacle par les sorties 42 comme montré par les flèches 58.

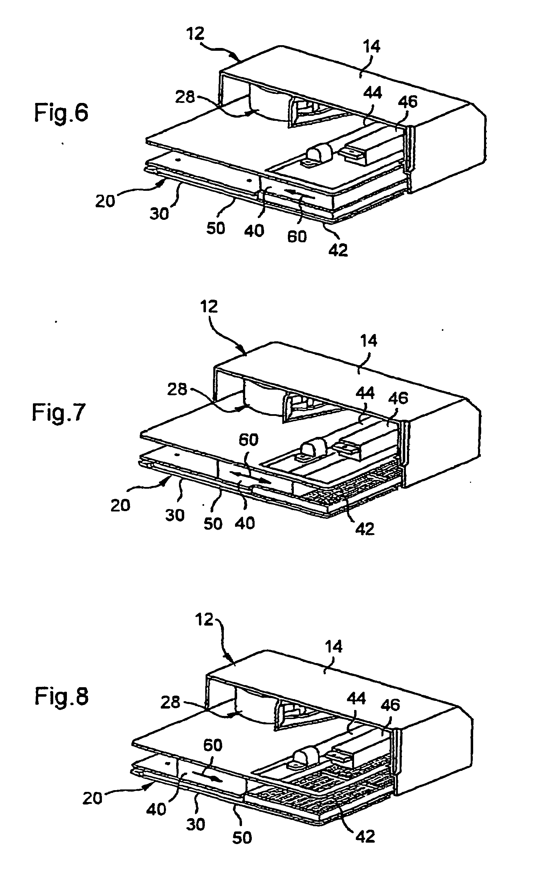

On se réfère maintenant aux figures 6 à 8 qui représentent une autre forme de réalisation de l'invention qui s'apparente à celle des figures 1 et 2.

Comme dans le cas des figures 4 et 5, des moyens de commutation sont prévus pour assurer sélectivement la ventilation ou la filtration. Ici, le boîtier comporte un couvercle 20 avec une face principale 50 dans laquelle est aménagée une entrée d'air 30 (non visible sur les figures 6 à 8) et une sortie d'air 42 qui est visible seulement sur les figures 7 et 8.

De façon préférentielle, l'entrée d'air 30 et les sorties d'air 42 comportent des éléments orientant les flux d'air entrant et sortant du module 10. Ces éléments peuvent notamment être des aubes ou des déflecteurs. Afin de faciliter la circulation des flux d'air, l'orientation des éléments d'orientation du flux d'air entrant par l'entrée d'air 30 est opposée à l'orientation du flux d'air sortant par les sorties d'air 42. Ainsi, les flux d'air permettent et sortent du module 10 selon des directions différentes.

Un telle disposition permet de réduire l'effet de recirculation (réintroduire le flux d'air directement issu des sorties d'air 42) tout en assurant une orientation du flux d'air sortant dans une direction souhaitée.

Le filtre 40 est monté coulissant dans la direction de la flèche 60 parallèlement au couvercle 50. Le coulissement du filtre s'effectue en regard de la sortie d'air 42 entre une position dans laquelle le filtre obture la sortie d'air (figure 6) pour faire passer de l'air filtré et une position dans laquelle le filtre dégage la sortie d'air pour faire passer de l'air non filtré (figure 8). Le filtre peut prendre des positions intermédiaires, comme représenté sur la figure 7, dans laquelle une partie du flux d'air est filtrée et une autre partie du flux d'air n'est pas filtrée.

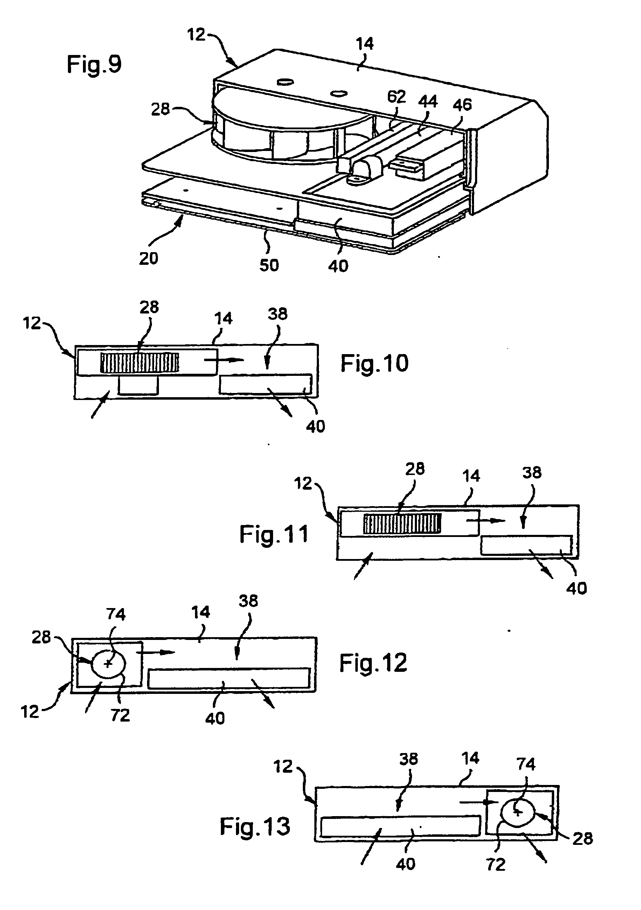

On se réfère maintenant à la figure 9 qui représente une autre forme de réalisation de l'invention qui s'apparente à celles des figures 1 à 3. Ici, le boîtier loge en plus une résistance électrique 62, en particulier une résistance du type à coefficient de température positif (en abrégé résistance CTP). Une telle résistance permet, si on le souhaite d'assurer un chauffage de l'air issu du pulseur 28, avant la traversée du filtre 40. Il faut cependant veiller à ce que le chauffage de l'air n'interfère pas avec le filtre. En effet, certains types de filtres ne fonctionnent pas de façon optimale avec un air réchauffé.

On se réfère maintenant aux figures 10 à 13 qui montrent respectivement quatre modules qui ont tous en commun de délimiter une chambre intérieure 38 de volume fixe, c'est-à-dire constant. Dans le cas des figures 10 à 12 le pulseur 28 est placé en amont par rapport au filtre 40, tandis que dans le cas de la figure 13, le pulseur est placé en aval par rapport au filtre. Dans tous les cas, la chambre 38 est placée entre le pulseur 28 et le filtre 40. Dans le cas de la figure 10, le pulseur est du type centrifuge/radial avec un moteur électrique à balai, tandis que dans le cas de la figure 1.1, le pulseur est du type centrifuge/radial avec un moteur électrique sans balai, encore appelé "brushless" (terme anglo-saxon). Dans le cas des figures 12 et 13, le pulseur est du type à écoulement transversal/tangentiel. Il comporte une turbine 72 de forme allongée tournant autour d'un axe 74 qui dans l'exemple est parallèle à la paroi supérieure 14 du boîtier.

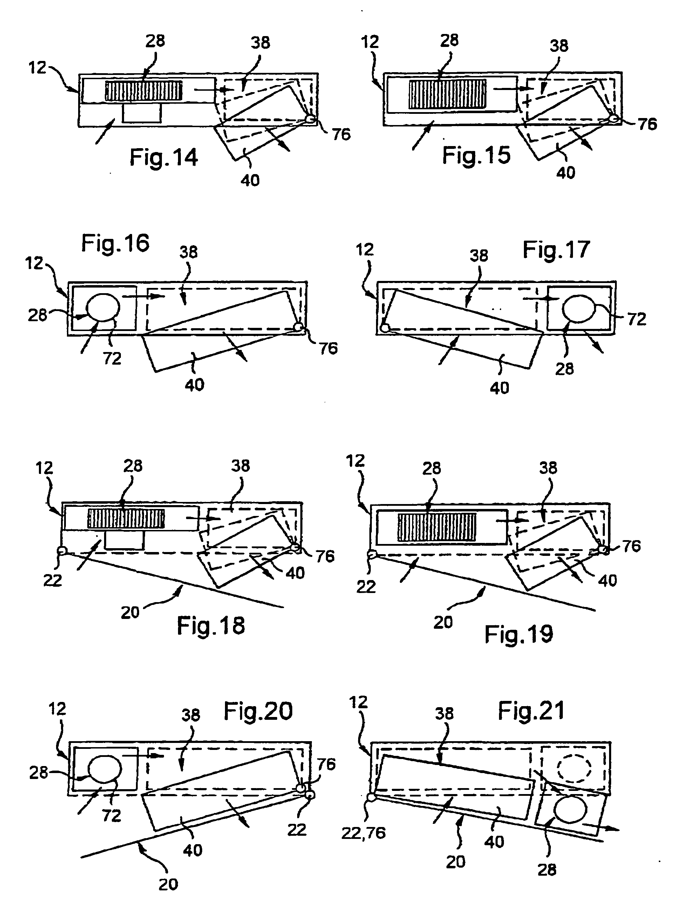

Les figures 14 à 17 représentent des pulseurs analogues respectivemerit à ceux des figures 10 à 13. La principale différence réside ici dans le fait que le filtre 40 est monté pivotant autour d'un axe 76 entre une position rentrée dans laquelle le volume d'air de la chambre 38 est réduit et une position sortie dans laquelle le volume d'air de la chambre 38 est augmenté. Dans la position rentrée, dans laquelle le filtre est représenté en pointillé, l'appareil peut fonctionner avec un encombrement réduit du fait que le filtre est escamoté dans le boîtier. Dans la position sortie, dans laquelle le filtre est représenté en trait plein, le volume de la chambre est augmerlté et le filtre peut fonctionner efficacement.

On se réfère maintenant aux figures 18 à 21 qui s'apparentent respectivement aux figures 14 à 17. Ici, le boîtier comprend en outre un couvercle pivotant 20 analogue à celui décrit précédemment. Dans le cas des figures 18 et 19, le couvercle 20 pivote autour d'un axe 22 parallèle à l'axe 76 de pivotement du filtre. Le couvercle doit être ouvert partiellement pour permettre le pivotement du filtre vers sa position sortie d'utilisation.

Dans le cas de la figure 20, l'axe 22 du couvercle est situé à proximité immédiate de l'axe de pivotement 76 du filtre si bien que le filtre et le couvercle peuvent pivoter quasiment en synchronisme. Dans le cas de la figure 21, le couvercle 20 supporte à la fois le filtre 40 et le pulseur 28 (ici un pulseur centrifuge), si bien que les axes 22 et 76 sont confondus.

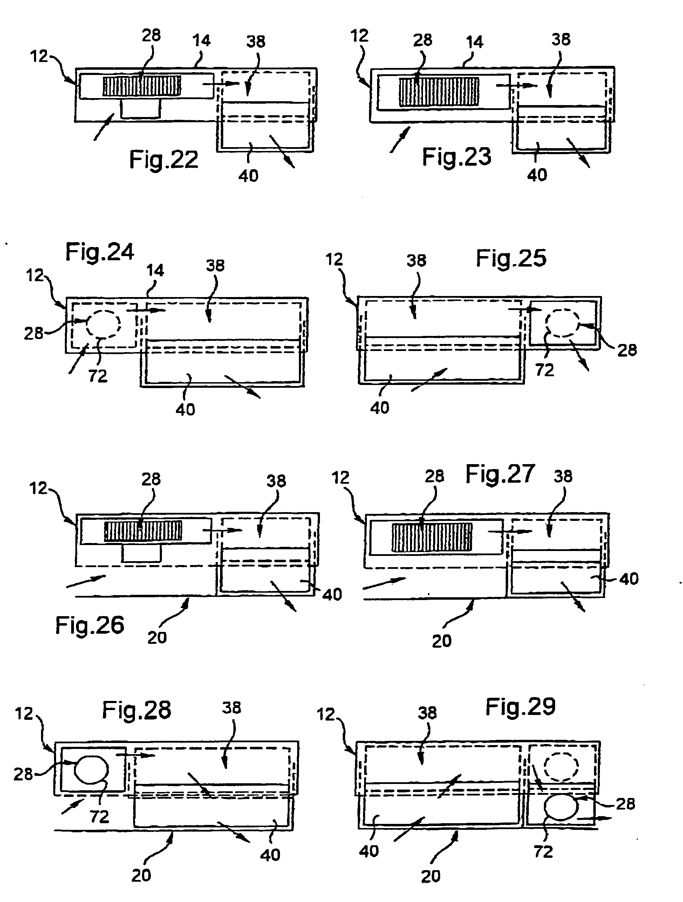

Les figures 22 à 25 montrent quatre formes de réalisation d'un pulseur qui s'apparentent respectivement aux figures 10 à 13. Ici, le filtre 40 est monté en translation dans une direction généralement perpendiculaire à la paroi supérieure 14 du boîtier. Cela permet de délimiter aussi une chambre 38 de volume variable entre le pulseur et le filtre. Le filtre est déplaçable entre une position rentrée qui est représentée en trait pointillé et une position sortie qui est représentée en trait plein.

On se réfère maintenant aux figures 26 à 29 qui s'apparentent respectivement aux figures 22 à 25. On voit que, à chaque fois, le boîtier 12 comporte un couvercle 20 qui supporte le filtre 40. Ce couvercle 20 est ici mobile en translation dans une direction généralement perpendiculaire à la paroi supérieure 14 du boîtier. Ce couvercle peut être déplacé d'une position sortie (représentée en trait plein) à une position rentrée (représentée en trait pointillé). Dans le cas des figures 26 à 28, le couvercle sert de support au filtre 40. Dans le cas de la figure 29, le couvercle sert également de support au pulseur 28 (ici un pulseur à écoulement transversal/tangentiel), ce qui facilite l'accès au pulseur, notamment pour des raisons d'entretien.

Idéalement les positions rentrées des filtres des figures 14 à 29 correspondent à des positions de non-utilisation, alors que les positions sorties de ces figures correspondent à des positions d'utilisation.

Le dispositif de l'invention est susceptible de nombreuses variantes de réalisation.

Comme déjà indiqué, il peut faire appel à différents types de pulseurs, notamment du type radial ou de type à écoulement transversal/tangentiel.

Egalement, la nature du filtre est susceptible de nombreuses variantes. Il peut s'agir par exemple d'un filtre à particules, d'un filtre à charbon actif, ou encore d'un filtre photo-catalytique comme déjà mentionné.

Dans une variante de réalisation de la figure 3, la cloison 36 de forme incurvée peut être supprimée, l'air étant alors expulsé par la turbine 26 dans toutes les directions, sans être canalisé.

Le module de l'invention peut être implanté en un emplacement choisi à l'intérieur d'un habitacle, notamment de véhicule automobile. Il comportera à cet effet des moyens de fixation (non représentés ici) pour permettre son implantation dans l'habitacle. Egalement, des moyens de connexion électrique sont prévus pour relier électriquement le module à une source électrique qui peut être constituée par exemple par une prise d'allume-cigare ou toute autre prise électrique prévue dans l'habitacle.

## Revendications

1. Module de ventilation d'air notamment pour un habitacle de véhicule, comprenant un boîtier (12) propre à être installé dans un emplacement choisi de l'habitacle (H), le boîtier ayant au moins une entrée d'air (30) et au moins une sortie d'air (42) et logeant un organe de propulsion d'air (28) comprenant au moins un moteur et un élément rotatif (26) permettant de mettre en mouvement l'air, l'élément rotatif (26) étant logé dans une chambre intérieure (38) du boîtier (12), ledit module comportant un filtre (40), **caractérisé en ce que** l'organe de propulsion d'air (28) est placé en amont par rapport au filtre (40), si bien que la chambre intérieure (38) délimite un volume de détente pour l'air comprimé issu de l'organe de propulsion d'air.

2. Module de ventilation d'air selon la revendication 1, **caractérisé en ce que** le volume de détente a une longueur selon le flux d'air comprise entre 0 mm et 10 mm.

3. Module de ventilation d'air selon la revendication 1, **caractérisé en ce que** la chambre intérieure (38) est délimitée en sortie par le filtre (40).

4. Module de ventilation d'air selon l'une quelconque des revendications 1 à 3, **caractérisé en ce que** l'élément rotatif de l'organe de propulsion d'air (28) est une turbine radiale (26).

5. Module de ventilation d'air selon la revendication 4, **caractérisé en ce que** la turbine radiale (26) est dotée de pales, et **en ce que** le filtre (40) est espacé de la turbine.

6. Module de ventilation d'air selon l'une quelconque des revendications 1 à 3, **caractérisé en ce que** l'élément rotatif de l'organe de propulsion d'air (28) est une turbine tangentielle (72).

7. Module de ventilation d'air selon l'une quelconque des revendications précédentes, **caractérisé en ce que** la chambre intérieure (38) délimite un volume d'air fixe.

8. Module de ventilation d'air selon l'une des revendications 1 à 6, **caractérisé en ce que** la chambre intérieure (38) délimite un volume d'air variable créé par la mobilité d'au moins un organe interne (40) du module.

9. Module de ventilation d'air selon la revendication 8, **caractérisé en ce que** le filtre (40) est monté mobile dans le boîtier (12) entre une position rentrée où le volume de la chambre intérieure (38) est réduit et une position sortie où le volume de la chambre intérieure (38) est augmenté.

10. Module de ventilation d'air selon la revendication 9, **caractérisé en ce que** le filtre (40) est monté pivotant par rapport au boîtier (12).

11. Module de ventilation d'air selon la revendication 9, **caractérisé en ce que** le filtre (40) est monté mobile en translation par rapport au boîtier (12).

12. Module de ventilation d'air selon l'une des revendications précédentes, **caractérisé en ce qu**'il comporte un couvercle (20) fermant le boîtier (12).

13. Module de ventilation d'air selon la revendication 12, **caractérisé en ce que** le couvercle (20) dispose d'au moins une entrée d'air (30) et d'au moins au moins une sortie d'air (42, 54).

14. Module de ventilation d'air selon la revendication 12 ou 13, **caractérisé en ce que** le couvercle (20) est monté mobile par rapport au boîtier (12).

15. Module de ventilation d'air selon la revendication 14, **caractérisé en ce que** le filtre (40) est solidaire du couvercle (20).

16. Module de ventilation d'air selon l'une des revendications 12 à 15, **caractérisé en ce que** le couvercle (20) supporte aussi l'organe de propulsion d'air (28).

17. Module de ventilation d'air selon l'une des revendications 1 à 13, **caractérisé en ce qu'**il comprend au moins une sortie d'air filtré (42) pour de l'air issu du filtre (40) et au moins une sortie d'air ventilé (54) pour de l'air non filtré et des moyens de commutation pour faire passer sélectivement l'air par la sortie d'air filtré et/ou par la sortie d'air non filtré.

18. Module de ventilation d'air selon la revendication 15, **caractérisé en ce que** le boîtier (12) comporte un corps muni d'une face ouverte (18) et un couvercle (20) monté pivotant par rapport au corps entre une position rentrée dans le boîtier et une position sortie du boîtier, le couvercle (20) comportant au moins une sortie d'air filtré (42) aménagée dans une face principale (20) et au moins une sortie d'air non filtré (54) aménagée dans une face latérale (52), la sortie d'air non filtré étant dégagée par le corps du boîtier lorsque le couvercle est en position sortie et obturée par le corps du boîtier lorsque le couvercle est en position rentrée.

19. Module de ventilation d'air selon la revendication 15, **caractérisé en ce qu**e le boîtier (12) comporte une face principale (50) dans laquelle est aménagée au moins une sortie d'air (42) pour de l'air filtré et/ou de l'air non filtré, et en ce que le filtre (40) est monté coulissant en regard de la sortie d'air (42) entre une position dans laquelle le filtre dégage la sortie d'air pour faire passer de l'air non filtré et une position dans laquelle le filtre obture la sortie d'air pour faire passer de l'air filtré.

20. Module de ventilation d'air selon l'une des revendications 1 à 18, **caractérisé en ce qu**'il comprend au moins une résistance électrique (62), en particulier une résistance à coefficient de température positif (CTP) pour réchauffer l'air envoyé dans l'habitacle.

21. Module de ventilation d'air selon l'une des revendications 1 à 19, **caractérisé en ce que** le filtre (40) est choisi parmi les filtres à particules, les filtres à charbon actif et les filtres photo-catalytiques.

22. Module de ventilation d'air selon l'une des revendications 12 à 21, **caractérisé en ce que** l'entrée d'air (30) et la sortie d'air (42, 54) comportent des éléments d'orientation des flux d'air entrant et sortant du boîtier (10).

23. Module de ventilation d'air selon la revendication 22, **caractérisé en ce que** l'orientation du flux d'air entrant par l'entrée d'air (30) est opposée à l'orientation du flux d'air sortant par les sorties d'air (42, 54).

24. Module de ventilation d'air selon l'une des revendications précédentes, **caractérisé en ce que** le boîtier (10) comporte une zone dite 'fonctionnelle' regroupant les composants fonctionnels du module (10) et une zone dite 'technique' regroupant les composants entraînant une dégradation des performances aéro-acoustiques.

## Claims

1. Air ventilation module especially for an automobile vehicle, comprising a housing (12) capable of being installed in a chosen position in the vehicle interior (H), wherein the housing has at least one air inlet (30) and at least one air outlet (42) and including an air propulsion element (28) comprising at least one motor and one rotary element (26) permitting the air to be moved, wherein the rotary element (26) is located inside a internal chamber (38) of the housing (12), wherein said module features a filter (40), **characterised in that** the air propulsion element (28) is positioned upstream with respect to the filter (40), such that the internal chamber (38) defines an expansion volume for the compressed air issued from the air propulsion element.

2. Air ventilation module according to claim 1, **characterised in that** the expansion volume has a length in relation to the air flow of between 0 mm and 10 mm.

3. Air ventilation module according to claim 1, **characterised in that** the internal chamber (38) is defined at its outlet by the filter (40).

4. Air ventilation module according to any of claims 1 to 3, **characterised in that** the rotary element of the air propulsion element (28) is a radial turbine (26).

5. Air ventilation module according to claim 4, **characterised in that** the radial turbine (26) is equipped with blades, and **in that** the filter (40) is distant from the turbine.

6. Air ventilation module according to any of claims 1 to 3, **characterised in that** the rotary element of the air propulsion element (28) is a tangential turbine (72).

7. Air ventilation module according to any of the previous claims, **characterised in that** the internal chamber (38) defines a fixed volume of air.

8. Air ventilation module according to any of claims 1 to 6, **characterised in that** the internal chamber (38) defines a variable volume of air created by the mobility of at least one internal element (40) of the module.

9. Air ventilation module according to claim 8, **characterised in that** the filter (40) is mounted so that it is mobile in the housing (12) between a retracted position where the volume of the internal chamber (38) is reduced and an extended position where the volume of the internal chamber (38) is increased.

10. Air ventilation module according to claim 9, **characterised in that** the filter (40) is mounted so that it pivots with respect to the housing (12).

11. Air ventilation module according to claim 9, **characterised in that** the filter (40) is mounted so that it is mobile in translation with respect to the housing (12).

12. Air ventilation module according to any of previous claims, **characterised in that** it features a cover (20) sealing the housing (12).

13. Air ventilation module according to claim 12, **characterised in that** the cover (20) has at least one air inlet (30) and at least one air outlet (42, 54).

14. Air ventilation module according to claim 12 or 13, **characterised in that** the cover (20) is mounted so that it is mobile with respect to the housing (12).

15. Air ventilation module according to claim 14, **characterised in that** the filter (40) is attached to the cover (20).

16. Air ventilation module according to any of claims 12 to 15, **characterised in that** the cover (20) also supports the air propulsion element (28).

17. Air ventilation module according to any of claims 1 to 13, **characterised in that** it comprises at least one filtered air outlet (42) for the air issued from the filter (40) and at least one ventilated air outlet (54) for the non filtered air and switching means to pass the air selectively via the filtered air outlet and/or via the non filtered air outlet.

18. Air ventilation module according to claim 15, **characterised in that** the housing (12) features a body equipped with an open face (18) and a cover (20) mounted so that it pivots with respect to the body between a retracted position in the housing and an extended position of the housing, wherein the cover (20) has at least one filtered air outlet (42) fitted in a main face (20) and at least one non filtered air outlet (54) fitted in a lateral face (52), wherein the non filtered air outlet is cleared by the body of the housing when the cover is in an extended position and blocked by the body of the housing when the cover is in a retracted position.

19. Air ventilation module according to claim 15, **characterised in that** the housing (12) features a main face (50) in which is fitted at least one air outlet (42) for the filtered air and/or the non filtered air, and **in that** the filter (40) is mounted so that it slides opposite the air outlet (42) between a position in which the filter clears the air outlet to pass the non filtered air and a position in which the filter blocks the air outlet to pass the filtered air.

20. Air ventilation module according to any of claims 1 to 18, **characterised in that** it comprises at least one electrical resistor (62), in particular a positive temperature coefficient resistor (PTC) to heat the air blown into the vehicle interior.

21. Air ventilation module according to any of claims 1 to 19, **characterised in that** the filter (40) is chosen from particle filters, active charcoal filters and photocatalytic filters.

22. Air ventilation module according to any of claims 12 to 21, **characterised in that** the air inlet (30) and the air outlet (42, 54) feature elements for orientating the air flows entering and leaving the housing (10).

23. Air ventilation module according to claim 22, **characterised in that** the orientation of the air flow entering via the air inlet (30) is opposed to the orientation of the air flow leaving via the air outlets (42, 54).

24. Air ventilation module according to any of the previous claims, **characterised in that** the housing (10) has a 'functional' zone containing all of the functional components of the module (10) and a 'technical' zone containing the components that are detrimental to the aero-acoustic performances.

## Patentansprüche

1. Lüftermodul, insbesondere für einen Fahrzeuginnenraum, mit einem Gehäuse (12), der dazu geeignet ist, an einer bestimmten Stelle im Innenraum (H) dieses Fahrzeugs angebracht zu werden, wobei das Gehäuse mindestens einen Lufteinlass (30) und mindestens einen Luftauslass (42) besitzt sowie ein Luftbeschleunigungsorgan (28) aufnimmt, das mindestens aus einem Antriebsmotor und einem Drehteil (26) besteht, mit dem die Luft in Bewegung versetzt werden kann, wobei das Drehteil (26) in einer Innenkammer (38) des Gehäuse (12) angebracht ist und der Modul einen Filter (40) besitzt, **dadurch gekennzeichnet, dass** das Luftbeschleunigungsorgan (28) vor dem Filter (40) angeordnet ist, so dass die Innenkammer (38) einen Druckentspannungsraum für die verdichtet aus dem Luftbeschleunigungsorgan kommende Luft bildet.

2. Lüftermodul nach Anspruch 1, **dadurch gekennzeichnet, dass** der Druckentspannungsraum eine vom Luftstrom abhängige Länge zwischen 0 mm und 10 mm besitzt.

3. Lüftermodul nach Anspruch 1, **dadurch gekennzeichnet, dass** die Innenkammer (38) vor dem Luftauslass durch den Filter (40) begrenzt wird.

4. Lüftermodul nach einem der Ansprüche 1 bis 3, **dadurch gekennzeichnet, dass** das Drehteil des Luftbeschleunigungsorgans (28) eine radiale Turbine (26) ist.

5. Lüftermodul nach Anspruch 4, **dadurch gekennzeichnet, dass** die radiale Turbine (26) mit Leitschaufeln versehen ist und dass der Filter (40) in einem bestimmten Abstand von der Turbine angebracht ist.

6. Lüftermodul nach einem der Ansprüche 1 bis 3, **dadurch gekennzeichnet, dass** das Drehteil des Luftbeschleunigungsorgans (28) eine tangentiale Turbine (72) ist.

7. Lüftermodul nach einem der vorhergehenden Ansprüche, **dadurch gekennzeichnet, dass** die Innenkammer (38) ein festes Raumvolumen besitzt.

8. Lüftermodul nach einem der Ansprüche 1 bis 6, **dadurch gekennzeichnet, dass** die Innenkammer (38) ein variables Raumvolumen besitzt, das durch die Bewegbarkeit mindestens eines inneren Organs (40) des Moduls gebildet wird.

9. Lüftermodul nach Anspruch 8, **dadurch gekennzeichnet, dass** der Filter (40) beweglich zwischen einer Innenposition, in der der Raum der Innenkammer (38) kleiner ist, und einer Außenposition, in der der Raum der Innenkammer (38) größer ist, im Gehäuse (12) angebracht ist.

10. Lüftermodul nach Anspruch 9, **dadurch gekennzeichnet, dass** der Filter (40) schwenkbar in Bezug auf das Gehäuse (12) angebracht ist.

11. Lüftermodul nach Anspruch 9, **dadurch gekennzeichnet, dass** der Filter (40) in einer Translationsbewegung verlagerbar in Bezug auf das Gehäuse (12) angebracht ist.

12. Lüftermodul nach einem der vorhergehenden Ansprüche, **dadurch gekennzeichnet, dass** er einen Deckel (20) besitzt, mit dem das Gehäuse (12) verschlossen wird.

13. Lüftermodul nach Anspruch 12, **dadurch gekennzeichnet, dass** der Deckel (20) mindestens einen Lufteinlass (30) und mindestens einen Luftauslass (42, 54) besitzt.

14. Lüftermodul nach Anspruch 12 oder 13, **dadurch gekennzeichnet, dass** der Deckel (20) beweglich in Bezug auf das Gehäuse (12) angebracht ist.

15. Lüftermodul nach Anspruch 14, **dadurch gekennzeichnet, dass** der Filter (40) fest mit dem Deckel (20) verbunden ist.

16. Lüftermodul nach einem der Ansprüche 12 bis 15, **dadurch gekennzeichnet, dass** am Deckel (20) auch das Luftbeschleunigungsorgan (28) befestigt ist.

17. Lüftermodul nach einem der Ansprüche 1 bis 13, **dadurch gekennzeichnet, dass** er mindestens einen Auslass für gefilterte Luft (42) für die durch den Filter (40) strömende Luft und mindestens einen Auslass für ungefilterte Luft (54) für die Luft, die nicht durch den Filter strömt, sowie Mittel zum Umschalten besitzt, mit denen die Luft entweder durch den Luftauslass für gefilterte Luft oder durch den Luftauslass für ungefilterte Luft gelenkt werden kann.

18. Lüftermodul nach Anspruch 15, **dadurch gekennzeichnet, dass** der Gehäusekörper (12) eine offene Seite (18) und einen Deckel (20) besitzt, der in Bezug auf den Gehäusekörper zwischen einer Position "innen" im Gehäuse und einer Position "außen" außerhalb des Gehäuses schwenkbar ist, wobei der Deckel (20) mindestens einen Luftauslass für gefilterte Luft (42) auf seiner Hauptfläche (20) und mindestens einen Luftauslass für ungefilterte Luft (54) auf einer Seitenfläche (52) besitzt, wobei der Luftauslass für ungefilterte Luft vom Gehäusekörper freigegeben wird, wenn sich der Deckel in der Außenposition befindet, während er vom Gehäusekörper verschlossen wird, wenn sich der Deckel in der Innenposition befindet.

19. Lüftermodul nach Anspruch 15, **dadurch gekennzeichnet, dass** das Gehäuse (12) eine Hauptfläche (50) besitzt, in der mindestens ein Luftauslass (42) für gefilterte Luft und/oder für ungefilterte Luft angebracht ist, und **dadurch**, dass der Filter (40) wobei der Filter in Bezug auf den Luftauslass (42) verschiebbar zwischen einer Position, in der der Filter den Luftauslass freigibt, um ungefilterte Luft durchzulassen, und einer Position, in der der Filter den Luftauslass verschließt, um gefilterte Luft durchzulassen, angebracht ist.

20. Lüftermodul nach einem der Ansprüche 1 bis 18, **dadurch gekennzeichnet, dass** er mindestens einen Heizwiderstand (62), insbesondere einen Widerstand mit positiven Temperaturkoeffizienten (WPT) besitzt, um die in den Innenraum geblasene Luft vorzuwärmen.

21. Lüftermodul nach einem der Ansprüche 1 bis 19, **dadurch gekennzeichnet, dass** der Filter (40) wahlweise ein Partikelfilter, ein Aktivkohlefilter oder ein fotokatalytischer Filter sein kann.

22. Lüftermodul nach einem der Ansprüche 12 bis 21, **dadurch gekennzeichnet, dass** der Lufteinlass (30) und der Luftauslass (42, 54) Bauteile besitzen, mit denen der Luftstrom bei dessen Eintritt und Austritt aus dem Modul (10) umgelenkt wird.

23. Lüftermodul nach Anspruch 22, **dadurch gekennzeichnet, dass** die Ausrichtung des Luftstroms am Lufteinlass (30) der Ausrichtung des Luftstroms an den Luftauslässen (42, 54) entgegengesetzt ist.

24. Lüftermodul nach einem der vorhergehenden Ansprüche, **dadurch gekennzeichnet, dass** das Gehäuse (10) eine "funktionelle Zone", in der alle funktionsspezifischen Bauteile des Moduls (10) angeordnet sind, und eine "technische Zone", in der bestimmte Bauteile untergebracht sind, durch die die aero-akustische Leistung beeinträchtigt werden kann, besitzt.
